# EUROPEAN PATENT APPLICATION

(11) **EP 2 560 034 A1**
(43) Date of publication of application: **20.02.2013**
(21) Application number: 12169897.1
(22) Date of filing: 29.05.2012
(51) Int. Cl.: G02B 5/30, G04F 5/14

(54) **Systems and methods for a nanofabricated optical circular polarizer**

(30) Priority: 15.08.2011 US 201113210042
(71) Applicant: Honeywell International Inc., Morristown, NJ 07962-2245 (US)
(72) Inventor: Salit, Mary K., Morristown, NJ New Jersey 07962-2245 (US); Compton, Robert, Morristown, NJ New Jersey 07962-2245 (US); Ridley, Jeff A., Morristown, NJ New Jersey 07962-2245 (US)
(74) Representative: Houghton, Mark Phillip

(57) **Abstract**

System and methods for a nanofabricated optical circular polarizer are provided. In one embodiment, a nanofabricated circular polarizer comprises a quarter wave plate; and a linear polarizer formed on a surface of the quarter wave plate.

## Description

### GOVERNMENT LICENSE RIGHTS

This invention was made with Government support under W 15PT7-10-CB-025 awarded by U.S. Army. The Government may have certain rights in the invention.

### BACKGROUND

For some applications, including atomic clocks based on coherent population transfer (CPT) in alkali atoms, it is important to have a light source which is circularly polarized to a high degree. Generally, the circular polarization of light is accomplished by utilizing two discrete optical elements, a linear polarizer and a quarter wave plate (QWP). The linear polarizer ensures that light is linearly polarized with minimal imperfections. Then, the linearly polarized light passes through a QWP to acquire circular polarization. This combination also acts as an optical isolator against back-reflected light, which reduces the noise in certain laser light sources.

In order for this combination of discrete optical elements to effectively work however, the axis of polarized light leaving the linear polarizer needs to be rotationally aligned with the axis of the QWP. The precise alignment needed for applications such as chip-scale atomic clocks (CSACs) can be difficult to obtain and maintain using discrete components. While single element circular polarizers do exist, they are typically formed from thin film polymer sheets that are glued together using, for example, an epoxy material. Such circular polarizers still suffer from rotational alignment issues because alignment of the component must be properly maintained as the epoxy cures. The total thickness of such circular polarizers can be on the order of 1mm, which would be too thick for practical use in many MEMS applications. Further, while the optical quality of such circular polarizers might be acceptable for applications such as "3D glasses", the application of epoxy can introduce optical flaws that adversely affect the performance of such circular polarizers for precision applications. Finally, for applications where the circular polarizer is exposed to a vacuum environment, epoxy materials and other adhesives are known to outgas, introducing contaminants into systems that use them.

For the reasons stated above and for other reasons stated below which will become apparent to those skilled in the art upon reading and understanding the specification, there is a need in the art for a single element, thin, circular polarizer that does not outgas under vacuum conditions.

### SUMMARY

The Embodiments of the present invention provide methods and systems for a Nanofabricated Optical Circular Polarizer and will be understood by reading and studying the following specification.

System and methods for a nanofabricated optical circular polarizer are provided. In one embodiment, a nanofabricated circular polarizer comprises a quarter wave plate; and a linear polarizer formed on a surface of the quarter wave plate.

### DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a diagram of a chip-scale atomic clock containing one embodiment of the present invention;

Figure 2A is a diagram depicting the nanostructures of the nanofabricated circular polarizer of one embodiment of the present invention;

Figure 2B is a diagram depicting a top down view of the surface of the circular linear polarizer of one embodiment of the present invention;

Figure 3A is a flowchart depicting a method of manufacture of one embodiment of the present invention;

Figure 3B is a graphical depiction of the method of Figure 3A; and

Figure 4 is a diagram depicting one embodiment of a system utilizing an embodiment of the present invention.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Embodiments of the present invention address polarization alignment and other problems of the prior art by providing for a single optical element that combines the functions of a linear polarizer and quarter wave plate (QWP) on a single substrate to form a circular polarizer. Such a combination produces a high degree of circular polarization and acts as an optical isolator against specular reflections. Further, a relatively small thickness of the optical element allows its use in micro-fabricated devices where space is limited.

As an example of one such optical element, a nanofabricated circular polarizer is provided that comprises a QWP having a nanofabricated wire pattern created directly on the QWP medium. The wire pattern may be created directly on the QWP medium through nanoimprint lithography, or other nanofabrication process. The wire pattern is aligned with a polarization axis of the QWP in such a way that light passing through the wire pattern and QWP medium results in circularly polarized light. The nanofabricated wire pattern thus acts as a linear polarizer element for light entering the QWP. By directly fabricating the wire pattern onto the QWP medium as a single optical element, embodiments of the present invention eliminate the need for a separate linear polarizing element and circular polarizing element. Further, embodiments of the present invention provide such an optical element that functions within a spectrum of wavelengths used by chip-scale atomic clocks, do not outgas contaminants during vacuum conditions, and are sufficiently thin for use micro-fabricated devices.

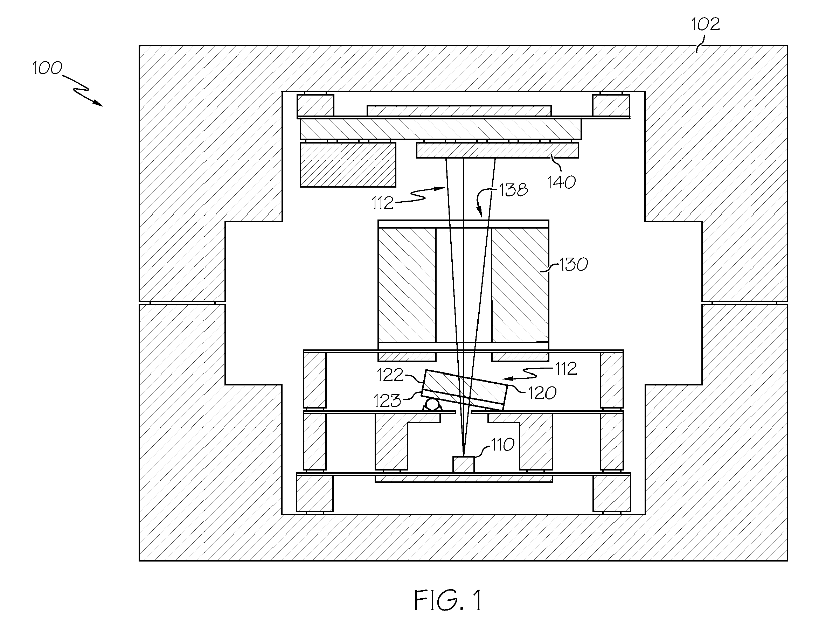

Figure 1 provides a simplified cross-sectional view of a Physics Package 102 for a CSAC 100 of one embodiment of the present invention. CSAC 100 comprises a vertical cavity surface emitting laser 110 (VCSEL), a nanofabricated circular polarizer 120, a vapor cell 130 and a photodetector 140. At least one chamber 138 is defined within vapor cell 130 to provide an optical path between VCSEL 110 and photo detector 140 for laser light 112 emitted by VCSEL 110.

In the embodiment shown in Figure 1, the nanofabricated circular polarizer 120 comprises a QWP 122 combined with a nanofabricated wire grid polarizer 123. As illustrated in Figure 1, wire grid polarizer 123 is created directly on the surface of QWP 122 facing vcsel 110. As such, laser light 112 emitted by VCSEL 110 is first linearly polarized by wire grid polarizer 123. The transmission axis of the wire grid polarizer is aligned at a 45 degree offset relative to the optical axis of the QWP 122. When the laser light exits nanofabricated circular polarizer 120, it is thus properly circularly polarized before reaching vapor cell 130.

Furthermore, nanofabricated circular polarizer 120 has the feature of acting as a barrier preventing light from being reflected back through nanofabricated circular polarizer 120. That is, reflected light re-entering the nanofabricated circular polarizer 120 would pass back through QWP 122. The light leaving QWP 122 is linearly polarized once again, but this time is polarized at a 90 degree shift in the electric field vector with respect to the axis of the wire grid polarizer 123. Wire grid polarizer 123 would therefore function to block further transmission of this reflected light.

As would be appreciated by those of ordinary skill in the art upon reading this specification, in one embodiment, the QWP 122 comprises a birefringent material that causes a quarter wavelength phase shift in laser light. In that case, the birefringent nature of the material provides the properties that create a QWP. Examples of such material include cut quartz or another birefringent material. In other embodiments, the QWP 122 is formed from a nanopatterned or nanostructured glass. That is, a glass substrate has a plurality of grooves patterned into it (on the order of 100 nm wide, for example). As light traverses the glass and propagates past the grooves, it experiences a difference index of refraction that creates the QWP effect. Wire grid polarizer 123 is fabricated directly on the QWP 122. Such fabrication is accomplished through one of a variety of nanolithography methods, as would be appreciated by one of ordinary skill in the art upon reading this specification. By creating a single component that accomplishes the roles of two discrete optical elements, the thickness of the circularly polarizing system is greatly reduced. Further, with embodiments of the present invention, introduction of outgassing epoxy materials within CSAC 100 is avoided. Because the wire grid polarizer 123 is fabricated directly on the quartz or nanostructured glass QWP 122, the resulting component is devoid of plastic or other adhesive materials that would outgas in a vacuum environment.

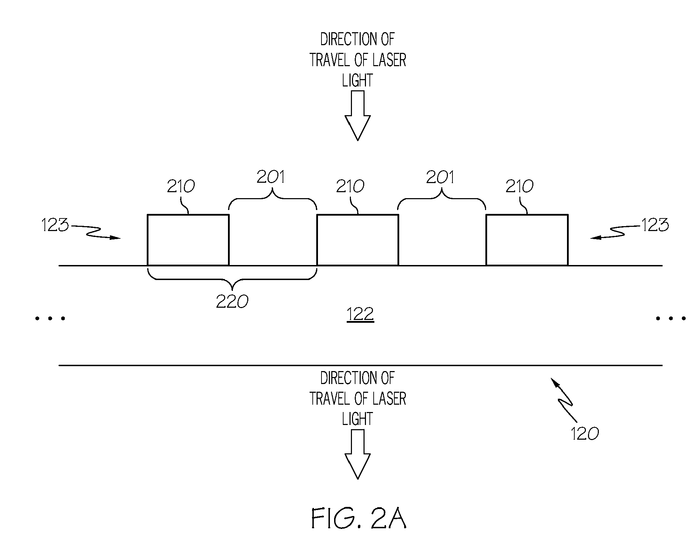

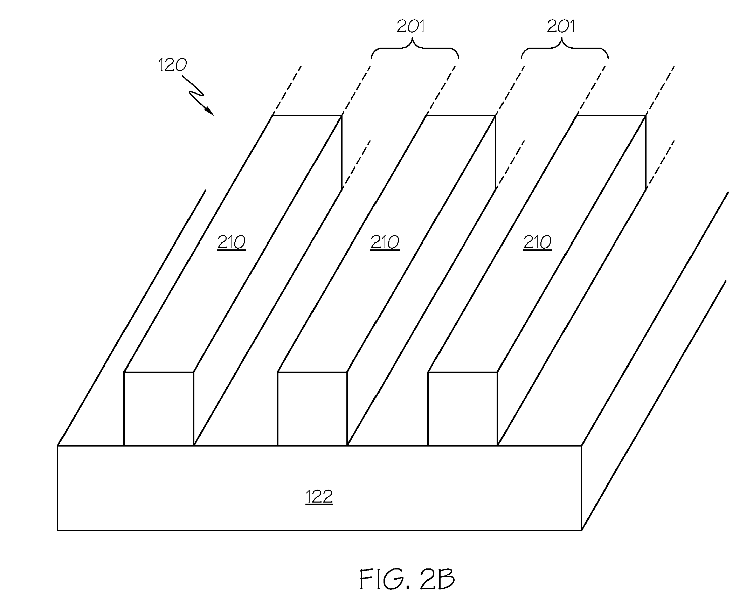

Figures 2A and 2B depict cross sectional views of a nanofabricated circular polarizer 120 of one embodiment of the present invention. In one embodiment, the following description of nanofabricated circular polarizer 120 fully applies to the nanofabricated circular polarizer 120 of Figure 1. As illustrated in Figure 2A, a wire grid polarizer is formed on the surface of a QWP 122 that functions as a substrate. As such, the substrate material used for QWP 122 comprises quartz, glass, or other birefringent material that causes a quarter wavelength phase shift to light passing through it. The wire grid polarizer 123 comprises a plurality of wires 210 arranged substantially parallel to one another. The material composition of the wires 210 includes, but is not limited to, aluminum (A1) wires. A plurality of interstitial gaps 201 are provided between each of the wires 210. Because the wires are formed directly on the QWP 122, the total thickness of the nanofabricated circular polarizer 120 is only marginally greater than the thickness of the QWP 122 itself. In some embodiments, the plurality of wires 210 are at least partially embedded within the material of QWP 122, further reducing the total thickness of nanofabricated circular polarizer 120, and protecting the wires 210 from physical damage such as scratches and wear. For example, in one embodiment the total thickness of nanofabricated circular polarizer 120 is between 1/4and 1/2 mm.

In one embodiment, to produce nanofabricated circular polarizer 120, wires 210 that form the wire grid polarizer 123 are placed on the QWP 122 medium in a repeating pattern, spaced apart so as to be an effective linear polarizer at the desired wavelength (λ). The sum of the width of one said interstitial gap 201 and one adjacent wire 210 constitutes a parameter known as the pitch 220. Generally, the distance of the interstitial gap 201 is designed to be less than one λ of the light emitted by the light source. For example, with respect to Figure 1, the distance of the interstitial gaps 201 within nanofabricated circular polarizer 120 would be less than the λ of laser light 112. As such, the pitch 220 of nanofabricated circular polarizer 120 is designed as a function of λ. That is, the pitch can be designed to suit the needs of a particular application, such as working at different λ ranges of a light source in the particular application. In addition to pitch, the determination of parameters such as wire thickness (as opposed to width) and duty cycle (e.g. wire fill-ratio in relation to pitch), are also readily apparent to a person having ordinary skill in the art. The particular material for forming QWP 122 is also readily determined by one of ordinary skill in the art upon reading this specification according to the λ of a light source, or based on the material desired. Once these parameters are set, nanofabricated circular polarizer 120 will efficiently polarize light passing through it.

In one embodiment, a nanofabricated polarizer circular polarizes light at a wavelength where λ = 795nm. The nanofabricated circular polarizer 120 comprises aluminum wires 210 that form a wire grid polarizer 123, and a QWP 122 substrate. The aluminum wires 210 are spaced such that they have a pitch 220 of 390nm. The aluminum wires 210 have a width of 195nm and a thickness (depth) of 260nm. This leaves interstitial gaps 201 of the same width at 195nm (i.e. a duty cycle of 50%). The QWP 122 substrate is a single-crystal quartz substrate, having a thickness of 250µm.

In operation light that passes through the wire grid polarizer 123 becomes linearly polarized and as such the plurality of wires 210 formed on QWP 122 constitutes a wire grid polarizer 123 when placed in such a periodic pattern. Although only a portion of a nanofabricated circular polarizer 120 is illustrated in Figure 2A, wires 210 are formed across the surface of QWP 122 and in one embodiment run the length of QWP 122. Figure 2B depicts a view of the surface of nanofabricated circular polarizer 120 from a top down perspective. The plurality of wires 210 run the length of QWP 122, with QWP 122 acting as substrate material. The resulting pattern is uniformly fabricated onto the whole of the QWP 122, with interstitial gaps 201 between each of the wires 210.

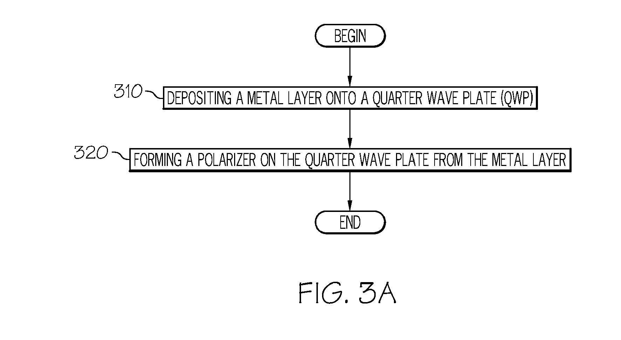

Figure 3A is a flowchart depicting a method for creating one embodiment of a nanofabricated circular linear polarizer. For one embodiment, the method shown in Figure 3A applies to fabrication of nanofabricated circular polarizer 120.

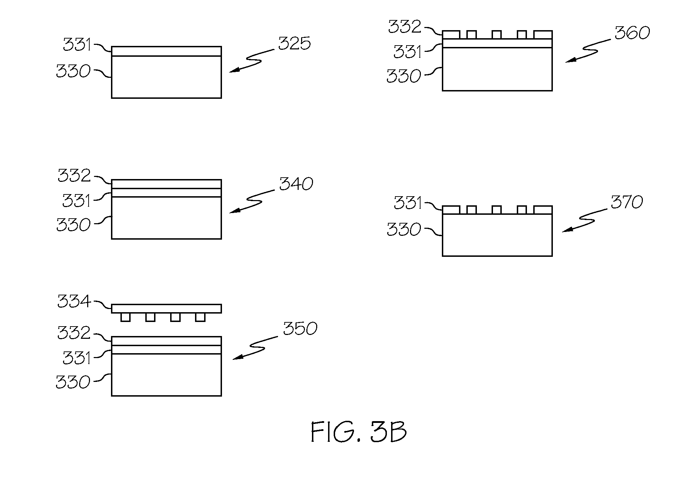

The method begins at 310 with depositing a metal layer onto a quarter wave plate (QWP). This is illustrated graphically at 325 in Figure 3B, where metal layer 331 is deposited on QWP 330. Metal layer 331 can be deposited by evaporation or sputtering, for example. The thickness and type of metal layer is determined by desired characteristics of the polarizer and will at least partially depend on the λ of light emitted from the light source. In one embodiment, the metal layer can comprise aluminum, copper, or other metal material. In another embodiment, the QWP can comprise a quartz material or nanostructured glass having properties that cause a quarter wave phase shift at a desired λ.

The method proceeds to 320 with forming a polarizer on the quarter wave plate from the metal layer. In at least one embodiment, at block 320, the metal layer is spin-coated with an imprint resist layer. This is illustrated graphically at 340 in Figure 3B, where imprint resist layer 332 is spin-coated onto metal layer 331. The imprint resist typically can be a monomer or polymer material that is cured by UV or heat during the imprinting process, or heated up and then cooled during the imprint process. In one embodiment, the imprint resist comprises a commercially available resist polymer from Microresist Technology GmbH called mri-8020. Further, in some embodiments, forming the polarizer at block 320 further comprises pressing the imprint resist layer with a silicon (Si) stamp. This is illustrated graphically at 350 in Figure 3B, where stamp 334 is applied to imprint resist layer 332. The stamp is patterned beforehand with the desired structures and characteristics of the polarizer, such as pitch, and duty cycle. In one embodiment, the imprint resist layer is heated and imprinted under pressure for 180 seconds. Then, the imprint resist is cooled by air and the pressure on the imprint is withdrawn. During the imprinting process, a residual layer of imprint resist can remain between the Si stamp and the metal layer where no imprint resist is desired. Once the Si stamp is demolded (shown generally in Figure 3B at 360), a residual layer of imprint resist can be removed. In one embodiment, the residual layer of imprint resist can be removed by O₂ reactive ion etching, or other reactive ion etching (RIE) processes. The metal layer is then etched to exhibit the imprinted pattern. This can also be achieved by RIE. In one embodiment, the metal layer comprises an aluminum layer that is etched using BC1₃/C1₂ plasma enhanced by a magnetic field. In other embodiments, different ions may be used. The remaining imprint resist on top of the metal layer is then removed. Once removed, the patterned metal layer will exhibit the desired pattern (shown at 370), such as the parallel metal wires 210, and interstitial gaps 201 shown in Figures 2A and 2B. In one embodiment, where the metal layer is Aluminum which has been patterned by the etching process, imprint resist remaining on top of the Aluminum pattern is removed using a photoresist-stripper. In one embodiment, the pattern results in parallel Aluminum wires. Although figure 3B graphically depicts a method for producing the nanofabricated circular polarizer by using nano-imprint lithography it is understood by a person of ordinary skill in the art that the nanofabricated circular polarizer can be produced by other nanolithography processes, such as electron-beam lithography, direct-write focused ion beam lithography, or other processes. Accordingly, forming the polarizer at block 320 is not limited to nano-imprint lithography. In other embodiments, other processes may be utilized to form the polarizer.

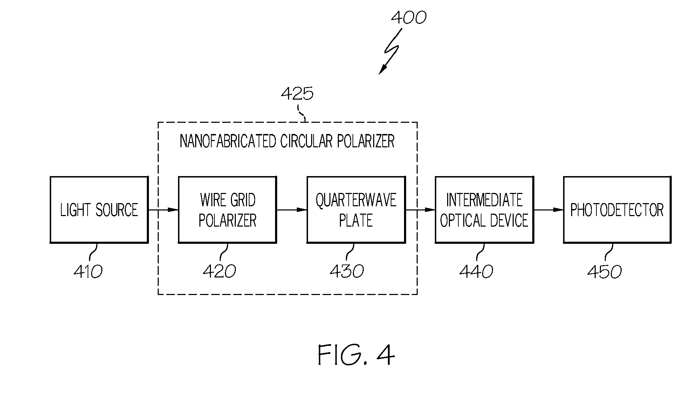

Figure 4 is a block diagram of an example system 400 utilizing a nanofabricated circular polarizer 425, showing the relationship between components of a system which may be applicable to any of the embodiments described above. In one embodiment, nanofabricated circular polarizer 425 has the features and options described with respect to nanofabricated circular polarizer 120 discusses above in Figures 1, 2A and 2B. The system 400 includes a light source and a nanofabricated circular polarizer 425 placed in the optical path of the light source 410. Nanofabricated circular polarizer 425 is followed in the optical path by one or more intermediate optical device 440 and a photodetector 450. In an example embodiment, the system 400 can be associated with (i.e. contained within) a CSAC. For example, where system 400 is a chip scale atomic clock, intermediate optical device 440 could be a vapor cell and light source 410 a VCSEL.

In one embodiment, in operation, light source 410 is a laser light source that provides an optical signal at a specific wavelength (λ) for a particular application. For example, in one embodiment, λ can be 795nm. In another embodiment, λ can be 894.5nm. For one embodiment of system 400, nanofabricated circular polarizer 425 comprises a wire grid polarizer 420 formed on a surface of a quarter wave plate 430. The wire grid polarizer 420 only allows light linearly polarized along a certain axis to pass through and is aligned to the optical axis of quarter wave plate 430. In one embodiment, the wire grid polarizer 420 is aligned such that its transmission axis is offset by 45 degrees relative to the optical axis of the QWP 430.

In an alternate embodiment, the QWP 430 comprises quartz or grooved glass that provides birefringent characteristics and can create a quarter wave phase delay of the light source 410. Linearly polarized light from the wire grid polarizer 420 will acquire a varying fidelity of circular polarization depending on the relative offset between the transmission axis of the wire grid polarizer 420 and the optical axis of the QWP 430. Aligning the transmission axis of the wire grid polarizer 420 to a 45 degree offset relative to the optical axis of the QWP 430 results in high fidelity circular polarization of the light.

### EXAMPLE EMBODIMENTS

Example 1 includes a nanofabricated circular polarizer, the polarizer comprising a quarter wave plate; and a linear polarizer formed on a surface of the quarter wave plate.

Example 2 includes the polarizer of Example 1, wherein the quarter wave plate comprises either a birefringent material or a birefringent grooved glass material.

Example 3 includes the polarizer of any of Examples 1-2, wherein the linear polarizer comprises a wire grid polarizer fabricated on a substrate that comprises the surface of the quarter wave plate.

Example 4 includes the polarizer of any of Examples 1-3, wherein the linear polarizer comprises a metal layer deposited on the surface of the quarter wave plate, the metal layer forming a pattern that comprises a plurality of metal wires separated by interstitial gaps.

Example 5 includes the polarizer of Example 4, wherein a pitch of the linear polarizer is formed to polarize light having one of a wavelength of 795nm or 894.5nm.

Example 6 includes the polarizer of any of Examples 1-5, wherein the linear polarizer is at least partially embedded within the surface of the quarter wave plate.

Example 7 includes a chip-scaled atomic clock (CSAC) utilizing a nanofabricated circular polarizer, the atomic clock comprising a vertical cavity surface emitting laser (vcsel); a photo detector; a vapor cell, wherein the vapor cell includes a chamber that defines at least part of an optical path for laser light between the vcsel and the photo detector; and a nanofabricated circular polarizer in the optical path between the vcsel the vapor cell.

Example 8 includes the atomic clock of Example 7, wherein the nanofabricated circular polarizer comprises a linear polarizer; and a quarter wave plate; wherein the linear polarizer comprises a wire grid polarizer fabricated on a substrate that comprises a surface of the quarter wave plate.

Example 9 includes the atomic clock of Example 8, wherein the wire grid polarizer comprises aluminum wires.

Example 10 includes the atomic clock of any of Examples 8-9, wherein the quarter wave plate comprises either of quartz or nanostructured glass.

Example 11 includes the atomic clock of any of Examples 8-10, the nanofabricated circular polarizer further comprising a linear polarizer and a quarter wave plate, wherein the linear polarizer comprises a metal layer deposited on a surface of the quarter wave plate, the metal layer forming a pattern of metal wires separated by interstitial gaps.

Example 12 includes the atomic clock of Example 11, wherein a pitch of the linear polarizer is based on polarizing light emitted from the vertical cavity surface emitting laser.

Example 13 includes the atomic clock of Example 12, wherein the light emitted from the vertical cavity surface emitting laser has one of a wavelength of 795nmof894.5nm.

Example 14 includes a method of manufacturing a nanofabricated circular polarizer, the method comprising depositing a metal layer onto a quarter wave plate; and forming a linear polarizer on the quarter wave plate from the metal layer.

Example 15 includes the method of Example 14, wherein forming the linear polarizer further comprises spin-coating an imprint resist layer onto the metal layer; pressing the imprint resist layer with a stamp, the stamp patterned to provide structures for a linear polarizer; etching the metal layer; and removing the imprint resist material.

Example 16 includes the method of any of Examples 14-15, wherein the metal layer comprises aluminum.

Example 17 includes the method of any of Examples 14-16, wherein the imprint resist layer comprises mri-8020 material, is a UV curable monomer, or is polymer.

Example 18 includes the method of any of Examples 14-17, wherein the linear polarizer comprises a wire grid polarizer fabricated on a substrate that comprises a surface of the quarter wave plate.

Example 19 includes the method of any of Examples 14-18, wherein forming the linear polarizer transforms the metal layer into a pattern that comprises a plurality of metal wires separated by interstitial gaps.

Example 20 includes the method of any of Examples 14-19, wherein a pitch of the linear polarizer is formed to polarize light having one of a wavelength of 795nm or 895nm.

Although specific embodiments have been illustrated and described herein, it will be appreciated by those of ordinary skill in the art that any arrangement, which is calculated to achieve the same purpose, may be substituted for the specific embodiments shown. For example, elements of the various embodiments described above can be applied in combination to provide yet additional embodiments. Therefore, it is manifestly intended that this invention be limited only by the claims and the equivalents thereof.

## Claims

1. A nanofabricated circular polarizer, the polarizer comprising:
a quarter wave plate (122); and
a linear polarizer (123) formed on a surface of the quarter wave plate (122).

2. The polarizer of claim 1, wherein the quarter wave plate (122) comprises either a birefringent material or a birefringent grooved glass material.

3. The polarizer of claim 1, wherein the linear polarizer (123) comprises a wire grid polarizer fabricated on a substrate that comprises the surface of the quarter wave plate (122).

4. The polarizer of claim 1, wherein the linear polarizer (123) comprises a metal layer (331) deposited on the surface of the quarter wave plate (122), the metal layer (331) forming a pattern that comprises a plurality of metal wires separated by interstitial gaps.

5. The polarizer of claim 4, wherein a pitch of the linear polarizer (123) is formed to polarize light having one of a wavelength of 795nm or 894.5nm.

6. The polarizer of claim 1, wherein the linear polarizer (123) is at least partially embedded within the surface of the quarter wave plate (122)

7. A chip-scaled atomic clock (CSAC) utilizing the nanofabricated circular polarizer of claim 1, the atomic clock comprising:
a vertical cavity surface emitting laser (vcsel);
a photo detector;
a vapor cell, wherein the vapor cell includes a chamber that defines at least part of an optical path for laser light between the vcsel and the photo detector; and
the nanofabricated circular polarizer in the optical path between the vcsel the vapor cell.

8. A method of manufacturing a nanofabricated circular polarizer, the method comprising:
depositing a metal layer onto a quarter wave plate (122); and
forming a linear polarizer (123) on the quarter wave plate (122) from the metal layer.

9. The method of claim 8, wherein forming the linear polarizer (123) further comprises:
spin-coating an imprint resist layer onto the metal layer;
pressing the imprint resist layer with a stamp, the stamp patterned to provide structures for a linear polarizer (123);
etching the metal layer; and
removing the imprint resist material.

10. The method of claim 8, wherein forming the linear polarizer (123) transforms the metal layer into a pattern that comprises a plurality of metal wires separated by interstitial gaps.
